# EUROPEAN PATENT APPLICATION

(11) **EP 3 937 273 A1**
(43) Date of publication of application: **12.01.2022**
(21) Application number: 20767393.0
(22) Date of filing: 27.02.2020
(51) Int. Cl.: H01M 2/10, H01M 10/613, H01M 10/615

(54) **BATTERY PACK**

(30) Priority: 05.03.2019 CN 201910163147; 05.03.2019 CN 201920274624 U
(71) Applicant: Aiways Automobile Co., Ltd, Jiangxi 334000 (CN)
(72) Inventor: JIANG, Shengli, Shangrao, Jiangxi 334000 (CN)
(74) Representative: Manitz Finsterwald Patent- und Rechtsanwaltspartnerschaft mbB
(86) International application number: PCT/CN2020/076947
(87) International publication number: WO 2020/177609

(57) **Abstract**

Provided is a battery pack, comprising: battery modules; a battery pack case comprising multiple cross beams and longitudinal beams defining multiple module accommodation spaces for accommodation of the battery modules, one side surface of each module accommodation space being provided with a partition; a liquid cooling assembly provided at the outer side of the partition, the liquid cooling assembly performing thermal conduction with the battery module by means of the partition, wherein both the cross beam and the longitudinal beam have to overlapping connective members, a thermal insulation plate is placed on the overlapping connective members, the partition is placed on the thermal insulation plate, and the thermal insulation plates are positioned under the cross beams at two ends and provided between the cross beams and a lower cover, a first gap is formed between the partition corresponding to each module accommodation space and an inner side surface of the corresponding cross beam, and a second gap is formed between the partition corresponding to each module accommodation space and an inner side surface of the corresponding longitudinal beam. In the solution of the present application, a battery pack has a thermally insulated case structure, such that the effect of the environment on a battery is reduced, thereby enabling the battery pack to maintain a uniform temperature.

## Description

### TECHNICAL FIELD

The present application relates to the field of battery pack technology, and particularly to a battery pack box body and a battery pack capable of implementing functions of thermal insulation and temperature equalization.

### BACKGROUND

A large temperature difference of lithium-ion power battery may directly cause some defects: (1) the battery attenuation is inconsistent, and even the battery aging accelerated; (2) the estimation error of the battery state is larger, even the vehicle is unable to travel; (3) the cooling/heating efficiency of the battery pack is lowered, the precooling/pre-heating time is prolonged, the energy consumption is increased, and even the vehicle is unable to drive, and there may be risks in severe cases, such as fire, explosion and the like.

Too low battery temperature may reduce the available capacity and the available power of the battery. When the vehicle is sold and used in colder areas, in order to reduce the impact of the low temperature on the available capacity and available power of the battery, the battery pack needs to be equipped with an insulation structure. The higher battery temperature can accelerate the aging of the battery. In the hot summer environment, for a vehicle equipped with a battery pack with a liquid cooling system, when the vehicle is powered off, the environment may heat the battery, causing the battery temperature to even exceed 40°C. Therefore, for the power battery, whether the temperature is too high, or too low, or the temperature difference is too large, it may have a great adverse effect on the performances of the power battery and even the vehicle.

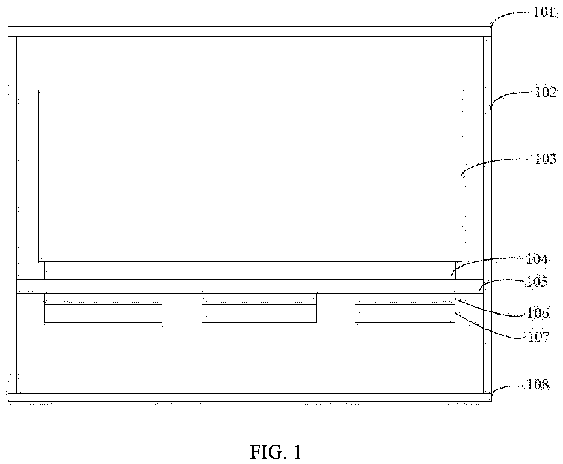

In the related art, in order to realize the dry-wet separation of the battery module and the liquid cooling system in the battery pack, a dry-wet separation battery pack is provided. The dry-wet separation battery pack in the related art is shown in FIG. 1. The battery pack includes, from top to bottom, an upper cover 101, a battery module 103, a first thermal conductive layer 104, a dry-wet separation isolation plate 105, a second thermal conductive layer 106, a liquid cooling plate 107, and a lower cover 108. The sides of the battery pack are provided with side panels 102. The upper cover 101, the side plates 102 and the isolation plate 105 form a first communication domain. Components of the battery pack are located in the first communication domain except the cooling pipeline and accessories of the cooling pipeline. The first communication domain is mainly configured to receive the battery module, Battery Management System (BMS), battery management system, high and low voltage wiring harness, etc. The lower cover 108, the isolation plate 105 and the side plates 102 form a second communication domain. The cooling pipeline and the accessories of the cooling pipeline are located in the second communication domain. The second communication domain is mainly configured to receive the cooling pipeline, the cooling plate and auxiliary support member, thermal conductive sheet, etc. The liquid cannot be sprayed or flow from the second communication domain into the first communication domain caused by the leakage and condensation of the antifreeze fluid.

However, such dry-wet separation battery pack has disadvantages that it is easily affected by the ambient temperature. Specifically, since the dry-wet separation isolation plate 105 of the battery pack is directly connected to the lower cover of the battery pack and is an aluminum profile structural member, the external environment will exchange heat with the module through the heat transfer path formed by the aluminum profile structural member. Without thermal isolation design, the dry-wet separation battery pack is more susceptible to the environment than non-dry-wet separation liquid-cooled battery packs using the same material, and the temperature difference of such battery pack is greater.

### SUMMARY

In view of this, as for the above technical problem in the related art, the purpose of the present application is to provide a battery pack with a structure of a thermal insulation box body, which can reduce the impact of the environment on the battery and implement the effect of the temperature equalization.

In an embodiment, the present invention provides a battery pack, including: a battery module; a battery pack box body, including a plurality of transverse beams and a plurality of longitudinal beams, the plurality of transverse beams and the plurality of longitudinal beams defining a plurality of module receiving spaces, the battery module being provided in a module receiving space, a side of each module receiving space being provided with an isolation plate, a first gap being provided between an isolation plate corresponding to each module receiving space and an inner side of a corresponding transverse beam, and a second gap being provided between the isolation plate corresponding to each module receiving space and an inner side of a corresponding longitudinal beam; a liquid cooling component, arranged on a side of the isolation plate opposite to the battery module, heat conduction being performed between the liquid cooling component and the battery module through the isolation plate.

Optionally, the first gap and the second gap are filled with a thermal insulation material.

Optionally, an inner side of a longitudinal beam is provided with a longitudinal beam overlap rib, the longitudinal beam overlap rib includes an overlap portion, and the overlap portion is located below the isolation plate, and a first thermal insulation plate is provided between an upper surface of the overlap portion and a lower surface of the isolation plate.

Optionally, the longitudinal beam overlap rib further includes an extension portion located between the overlap portion and the longitudinal beam, the overlap portion is bent downward relative to the extension portion, the extension portion is arranged to be aligned with the isolation plate, and the second gap is provided between the extension portion and the isolation plate.

Optionally, an inner side of a transverse beam is provided with a transverse beam overlap rib which is located below the isolation plate.

Optionally, the transverse beam includes end transverse beams provided at both ends of the battery pack box body, and a second thermal insulation plate is provided between a transverse beam overlap rib of an end transverse beam and the isolation plate.

Optionally, the transverse beam further includes a middle transverse beam located between the end transvers beams, a distance H1 between an isolation plate corresponding to the end transverse beam and a lower end surface of the end transverse beam is less than a distance H2 between an isolation plate corresponding to the middle transverse beam and a lower end surface of the middle transverse beam.

Optionally, the battery pack further includes a lower cover provided below the liquid cooling component, and a third thermal insulation plate is provided between the lower end surface of the end transverse beam and the lower cover.

Optionally, an end transverse beam at one end of the battery pack box body includes a first transverse beam and a second transverse beam; the first transverse beam, the second transverse beam and a longitudinal beam define an accessory receiving space, the accessory receiving space is configured to receive a battery management system and a high-voltage electrical box, a side of the accessory receiving space is provided with an accessory isolation plate, and edges of the accessory isolation plate respectively abut against an inner side of the first transverse beam, an inner side of the second transverse beam and an inner side of the longitudinal beam.

Optionally, the liquid cooling component includes a liquid cooling plate unit corresponding to the battery module in a one-to-one correspondence, a lower cover is provided below the liquid cooling component, and the transverse beam is configured to support on the lower cover after passing through a gap between liquid cooling plate units; an upper cover is provided above the battery pack box body, and the upper cover is configured to simultaneously cover the module receiving space and the accessory receiving space.

It should be understood that the above general description and the following detailed description are only exemplary and explanatory, and cannot limit the present application.

The battery pack provided by the present application has the following advantages.

The present application provides a battery pack with a structure of a thermal insulation box body, in which through the isolation between the isolation plate and the longitudinal beams as well as the transverse beams of the battery pack box body, the heat transfer is blocked from the periphery surface of the isolation plate to the transverse beams and the longitudinal beams, and from the transverse beams and longitudinal beams to the isolation plate, thereby reducing the impact of the environment on the battery, slowing down the heating effect of the environment on the battery, and achieving the effect of temperature equalization of the battery pack, reducing the battery aging speed, and improving the available capacity and service life of the battery. The overall structure is simple and has strong practicality.

### BRIEF DESCRIPTION OF THE DRAWINGS

By reading the detailed description of the non-restrictive embodiments with reference to the following accompanying drawings, other features, purposes and advantages of the present application will become more apparent.
FIG. 1 is a schematic structure diagram of a battery pack in the related art.
FIG. 2 is an exploded view of a battery pack according to an embodiment of the present application.
FIG. 3 is a schematic structure diagram of a battery pack box body according to an embodiment of the present application.
FIG. 4 is an enlarged view of a portion A in FIG. 3.
FIG. 5 is a schematic diagram illustrating matching of a longitudinal beam and an isolation plate according to an embodiment of the present application.
FIG. 6 is an enlarged view of matching portions of the longitudinal beam and the isolation plate in FIG. 5.
FIG. 7 is a schematic diagram illustrating matching of a longitudinal beam with a liquid cooling plate and a lower cover according to an embodiment of the present application.
FIG. 8 is an enlarged view of a portion B in FIG. 7.
FIG. 9 is a schematic diagram illustrating matching of a sixth transverse beam with an isolation plate according to an embodiment of the present application.
FIG. 10 is a schematic diagram illustrating matching of a third transverse beam with an isolation plate according to an embodiment of the present application.
FIG. 11 is a schematic diagram illustrating matching of a first transverse beam and a second transverse beam with an isolation plate according to an embodiment of the present application.
FIG. 12 is a schematic diagram illustrating matching of a sixth transverse beam with a liquid cooling plate and a lower cover according to an embodiment of the present application.
FIG. 13 is a schematic diagram illustrating matching of a third transverse beam with a liquid cooling plate and a lower cover according to an embodiment of the present application.
FIG. 14 is a schematic diagram illustrating matching of a first transverse beam and a second transverse beam with a liquid cooling plate and a lower cover according to an embodiment of the present application.
FIG. 15 is a cooling curve diagram of a battery pack during a test in the related art.
FIG. 16 is a cooling curve diagram of a battery pack during a test according to the present application.

### Reference signs:

In the related art,
101, upper cover; 105, isolation plate;
102, side plate; 106, second thermal conductive layer;
103, battery module; 107, liquid cooling plate;
104, first thermal conductive layer; 108, lower cover.

In the present application,
1, upper cover; 422, second longitudinal beam;
2, battery module; 43, isolation plate;
3, thermal conductive gasket; 44, longitudinal beam overlap rib;
4, battery pack box body; 441, extension portion;
41, transverse beam; 442, overlap portion;
411, first transverse beam; 45, first thermal insulation plate;
412, second transverse beam; 46, transverse beam overlap rib;
413, third transverse beam; 47, second thermal insulation plate;
414, fourth transverse beam; 48, module receiving space;
415, fifth transverse beam; 49, accessory receiving space;
416, sixth transverse beam; 5, liquid cooling component;
42, longitudinal beam; 6, lower cover;
421, first longitudinal beam; 7, third thermal insulation plate.

### DETAILED DESCRIPTION

Exemplary embodiments will be described below more fully with reference to the accompanying drawings. However, the exemplary embodiments can be implemented in various forms, and should not be construed as being limited to the examples set forth herein. Rather, these embodiments make the present application more comprehensive and complete, and fully convey the concept of the exemplary embodiments to those skilled in the art. The described features, structures or characteristics can be combined in one or more embodiments in any appropriate manner.

In addition, the accompanying drawings are only schematic illustrations of the present application, and are not necessarily drawn to scale. The same reference numerals in the figures denote the same or similar parts, and thus the repeated description thereof will be omitted.

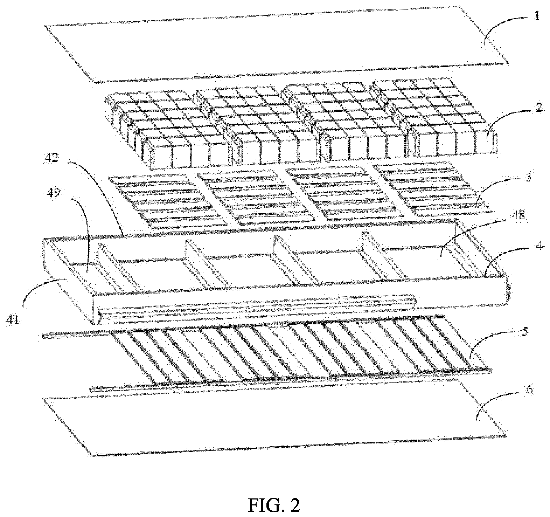

As shown in FIG. 2, in order to solve the above technical problem, an embodiment of the present application provides a battery pack, which includes a battery pack module 2, a battery pack box body 4 and a liquid cooling component 5. The battery pack box body 4 includes a plurality of transverse beams 41 and a plurality of longitudinal beams 42; the plurality of transverse beams 41 and the plurality of longitudinal beams 42 define a plurality of module receiving spaces 48; and the battery module 2 is placed in the module receiving space 48. An isolation plate 43 is provided on a lower side of each module receiving space 48. The liquid cooling component 5 is provided under the battery pack box body 4, and thermal conduction is performed between the liquid cooling component 5 and the battery module 2 through the isolation plate 43.

In this embodiment, an upper cover 1 is also provided above the module receiving space 48. The battery module 2 is located in the module receiving space 48 defined by the upper cover 1, the transverse beam 41, the longitudinal beam 42 and the isolation plate 43; and the liquid cooling component 5 is separated from the battery module 2 by the isolation plate 43 to avoid that the liquid is sprayed or flows into the module receiving space 48 caused by leakage and condensation of the antifreeze fluid in the liquid cooling component 5. The battery module 2 in the battery pack box body 4 performs the heat conduction with the liquid cooling component 5 through the isolation plate 43. In this embodiment, a thermal conductive gasket 3 is further provided between the battery module 2 and the corresponding isolation plate 43; and the battery module 2 performs the thermal conduction with the liquid cooling component 5 through the thermal conductive gasket 2 and the isolation plate 43 in sequence.

As shown in FIG. 2, in this embodiment, the liquid cooling component 5 includes a plurality of liquid cooling plate units corresponding to the battery modules 2 in a one-to-one correspondence; and there is a certain gap between two adjacent liquid cooling plate units for the transverse beam 41 to pass through. A lower cover 6 is provided under the liquid cooling component, and the transverse beam 41 passes through the gap between the liquid cooling plate units and supports on the lower cover 6, thereby supporting the battery pack box body 4 and battery module 2 as a whole together with the longitudinal beam 42.

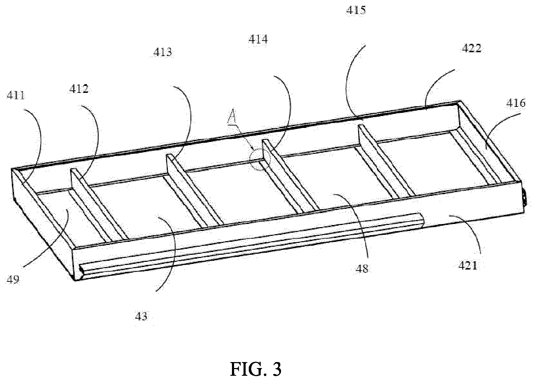

As shown in FIG. 3, in this embodiment, the battery pack box body 4 includes six transverse beams 411 to 416 and two longitudinal beams 421 and 422. However, the present application is not limited to this, and the number of transverse beams 41 and the number of longitudinal beams 42 can be selected and set according to requirements. In this embodiment, the first transverse beam 411, the second transverse beam 412, the first longitudinal beam 421, and the second longitudinal beam 422 define an accessory receiving space 49; and the battery module accessory is arranged in the accessory receiving space 49. The battery module accessory refers to other components in the battery pack other than the battery module, such as a Battery Management System (BMS), a high-voltage electrical box, and so on. The third transverse beam 413, the fourth transverse beam 414, the fifth transverse beam 415, the sixth transverse beam 416, the first longitudinal beam 421 and the second longitudinal beam 422 define four module receiving spaces 48. The specific number of module receiving spaces 48 can be selected according to the number of battery modules 2 in actual applications. The upper cover 1 simultaneously covers the accessory receiving space 49 and the module receiving spaces 48 to form a closed battery pack receiving cavity. The upper cover 1 can also be arranged in sections according to the setting of each receiving space.

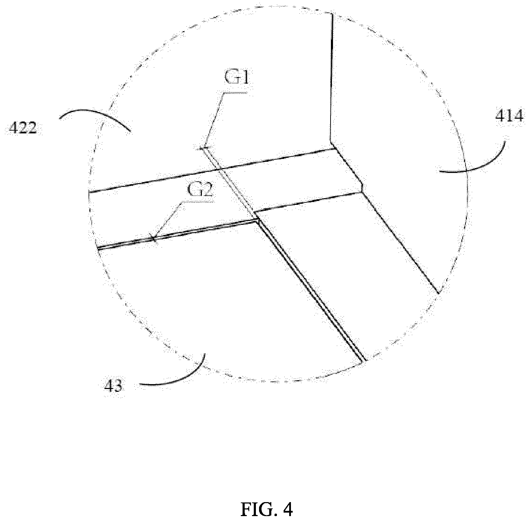

As shown in FIG. 4, in order to avoid thermal conduction between the isolation plate 43, and the transverse beam 41 and the longitudinal beam 42, there is a first gap G1 between the isolation plate 43 corresponding to each module receiving space 48 and an inner side of the transverse beam 41 defining the module receiving space 48; and there is a second gap G2 between the isolation plate 43 corresponding to each module receiving space 48 and an inner side of the longitudinal beam 42 defining the module receiving space 48. Therefore, the heat transfer from the isolation plate 43 to the transverse beam 41 and the longitudinal beam 42 is avoided, and the temperature equalization of the whole battery pack is improved; further, the heat transfer from the transverse beam 41 and the longitudinal beam 42 to the battery module 2 through the isolation plate 43 is also avoided, and the impact of environment temperature is reduced. The size of the first gap G1 may be the same as or different from the size of the second gap G2. In order to make the structure simple and uniform, in one embodiment, a value of the first gap G1 is the same as that of the second gap G2, and both can be selected in a range of 0.5 mm to 1.5 mm, for example, G1=G2≈1 mm. The first gap and the second gap may be air, or may be filled with thermal insulating materials, such as rubber, sponge, and the like.

In this embodiment, the lower side of the accessory receiving space 49 is also provided with an isolating plate 43, and edges of the isolation plate 43 can abut against the inner side of the first transverse beam 411, the inner side of the second transverse beam 412, and the inner side of the longitudinal beam 42, respectively. In other embodiments, a gap is provided between an edge of the isolation plate 43 and at least one of the inner side of the first transverse beam 411, the inner side of the second transverse beam 412, or the inner side of the longitudinal beam 42.

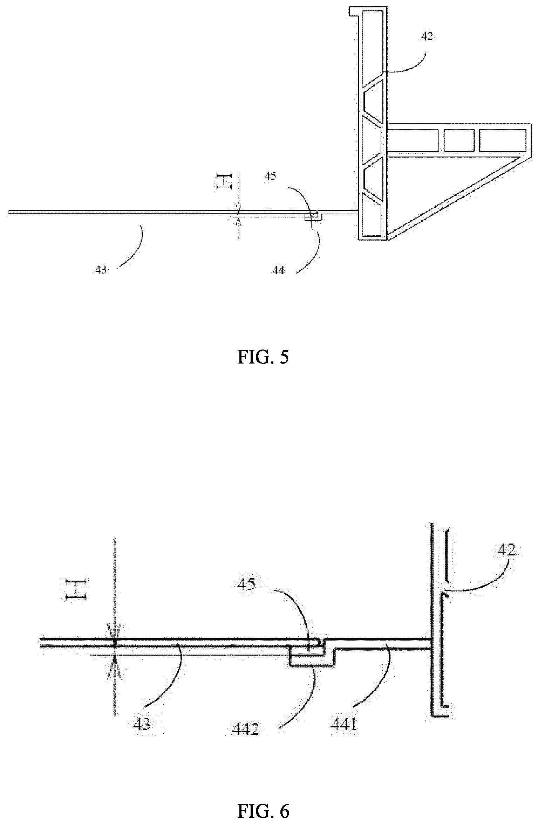

As shown in FIGS. 5 and 6, the inner side of the longitudinal beam 42 is provided with a longitudinal beam overlap rib 44, and the longitudinal beam overlap rib 44 includes an overlap portion 442 located below the isolation plate 43; and a first thermal insulation plate 45 is provided between the upper surface of the overlap portion 442 and the lower surface of the isolation plate 43. A thermal conductivity of the first thermal insulation plate 45 is preferably less than 1.5 W/mK, which is configured to block the heat transfer between an end surface of the insulation plate 43 and the longitudinal beam 42. In this embodiment, the longitudinal beam overlap rib 44 further includes an extension portion 441 located between the overlap portion 442 and the longitudinal beam 42; and the overlap portion 442 is bent downward relative to the extension portion 441. The extension portion 441 is aligned with the isolation plate 43, and there is a second gap between the extension portion 441 and the isolation plate 43 to block the heat transfer between the isolation plate 43 and the longitudinal beam 42.

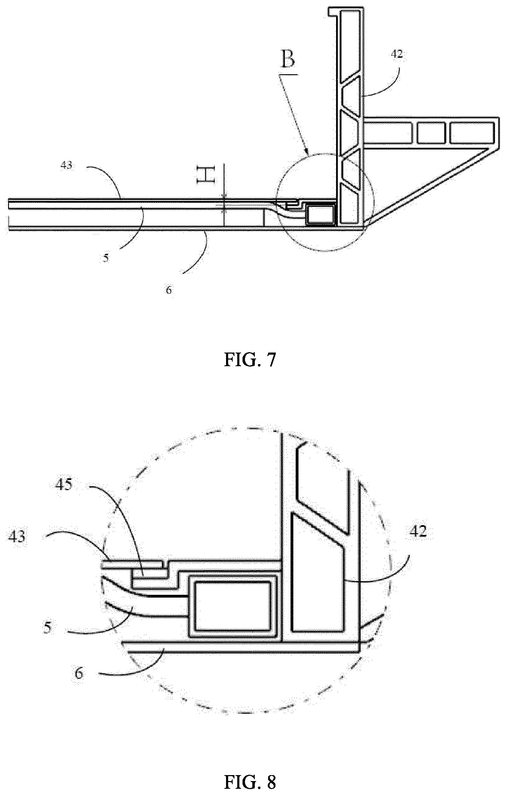

A height of the first thermal insulation plate 45 is denoted as H, and the height H definitely satisfies that there is no interference between the longitudinal beam overlap rib 44 and the liquid cooling component 5 after the liquid cooling component 5 is mounted below the battery pack box body 4. As shown in FIGS. 7 and 8, there is a gap between the liquid cooling component 5 and the longitudinal beam overlap rib 44 to ensure that there is no interference between the liquid cooling component 5 and the longitudinal beam overlap rib 44. The first thermal insulation plate 45 is preferably a thermal insulation material with a certain hardness, such as a plastic with a flame retardant property, which can withstand a pressure generated by the deformation of the thermal conductive gasket 3 without significant compression, in order to ensure better thermal contact between the thermal conductive gasket 3 and the battery module 2, as well as between the thermal conductive gasket 3 and the isolation plate 43. The first thermal insulation plate 45 can be assembled with the longitudinal beam overlap rib 44 to form a composite member, and then assembled with the isolation plate 43. Alternatively, the first thermal insulation plate 45 can be assembled with the isolation plate 43 to form a composite member before being assembled with the longitudinal beam overlap rib 44.

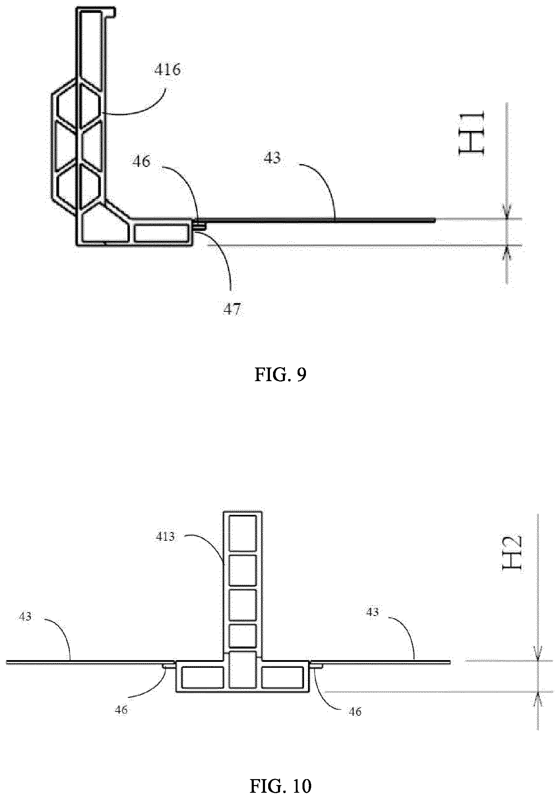

As shown in FIGS. 9 to 11, the inner side of the transverse beam 41 is provided with a transverse beam overlap rib 46; and the transverse beam overlap rib 46 is located below the isolation plate 43. In this embodiment, the transverse beam includes end transverse beams located at both ends of the battery pack box body 4 and a middle transverse beam located between the end transverse beams. In this embodiment, the end transverse beam includes a first transverse beam 411 and a second transverse beam 412 located at one end of the battery pack box body 4 and defining the accessory receiving space 49, and a sixth transverse beam 416 located at the other end of the battery pack box body 4. The middle transverse beam includes a third transverse beam 413, a fourth transverse beam 414, and a fifth transverse beam 415.

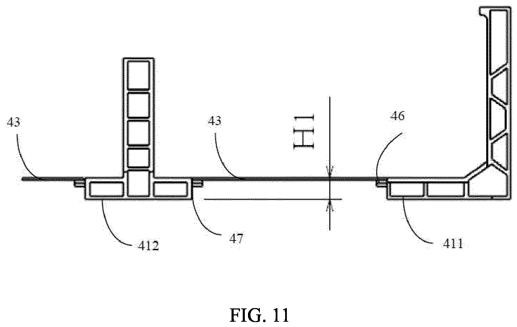

As shown in FIGS. 9 and 11, second thermal insulation plates 47 are provided between the isolation plates 43 and the transverse beam overlap ribs 46 of the first transverse beam 411, the second transverse beam 412 and the sixth transverse beam 416. As shown in FIG. 10, as an example, the third transverse beam 413 serves as a middle transverse beam, and the transverse overlap rib 46 of the middle transverse beam is in direct contact with the end surface of the isolation plate 43. According to the heat transfer theory, the rate of the heat exchange between the environment and the battery module 4 between the second transverse beam 412 and the third transverse beam 413, and the rate of the heat exchange between the environment and the battery module 4 between the fifth transverse beam 415 and the sixth transverse beam 416 are much greater than the rate of the heat exchange between the battery module 4 in other positions and the environment. Such design can balance the rate of the heat exchange between the battery modules 4 in different positions and the environment, and achieve the effect of the temperature equalization of the battery modules. The material of the second thermal insulation plate 47 can be the same as that of the first thermal insulation plate 45; and the second thermal insulation plate 47 can also be in a segmented form. The height of the second thermal insulation plate 47 is also preferably the same as the height of the first thermal insulation plate 45, in order to achieve a unified and simple structure.

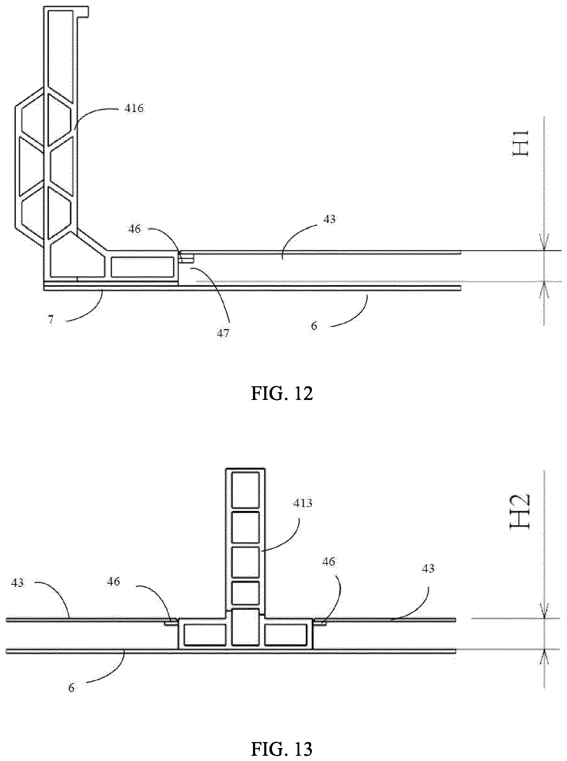

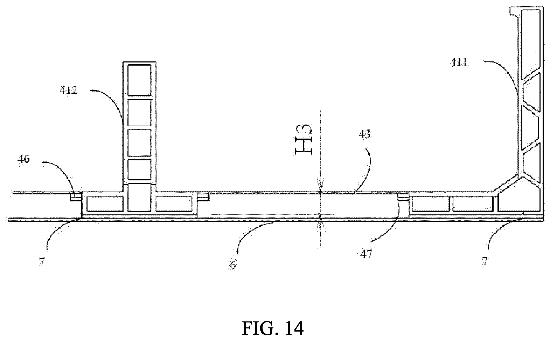

The matching structure of the sixth transverse beam 416 and the isolation plate 43 is shown in FIG. 9; a distance between the isolation plate 43 corresponding to the sixth transverse beam 416 and the lower end surface of the sixth transverse beam 416 is denoted as HI. The matching structure of the middle transverse beam and the isolation plate 43 is shown in FIG. 10, in which the third transverse beam 413 is taken as an example, the structures of the fourth transverse beam 414 and the fifth transverse beam 415 are the same as that of the third transverse beam 413. A distance between the isolation plate 43 corresponding to the middle transverse beam and the lower end surface of the middle transverse beam is denoted as H2. The matching structures of the first transverse beam 411 and the second transverse beam 412 with the isolation plates 43 are shown in FIG. 11. The distance between the isolation plates 43 corresponding to the first transverse beam 411 and the lower end surface of the first transverse beam 411, as well as the distance between the isolation plates 43 corresponding to the second transverse beam 412 and the lower end surface of the second transverse beam 412 is denoted as HI. In an embodiment, the distance H2 is greater than the distance HI, and a difference value between the distance H2 and the distance HI may be in a range of 1 mm to 3 mm. According to the heat transfer theory, the rate of the heat exchange between the environment and the battery module 4 between the second transverse beam 412 and the third transverse beam 413, and the rate of the heat exchange between the environment and the battery module 4 between the fifth transverse beam 415 and the sixth transverse beam 416 are much greater than the rate of the heat exchange between the battery module 4 in other positions and the environment. Therefore, as shown in FIGS. 12 to 14, third thermal insulation plates 7 are respectively provided between the lower end surface of the first transverse beam 411 and the lower cover 6, and between the lower end surface of the second transverse beam 412 and the lower cover 6, and between the lower end surface of the sixth transverse beam 416 and the lower cover 6. A value of the height of the third thermal insulation plate 7 is the same as that of (H2-H1). The thermal conductivity of the third thermal insulation plate 7 is less than 1.5W/mK. After the heat of the battery module 4 is transferred to the transverse beam 41, the heat transfer can be blocked to the lower cover 6 by using the third thermal insulation plate 7 between the transverse beam 41 and the lower cover 6, and then is lost to the environment. Such design can balance the rate of the heat exchange between the battery modules 4 in different positions and the environment, and achieve the effect of temperature equalization of the battery modules. The third thermal insulation plate 7 is recommended to use structural glue, which can simultaneously achieve better sealing, better effect of thermal insulation and better assembly strength.

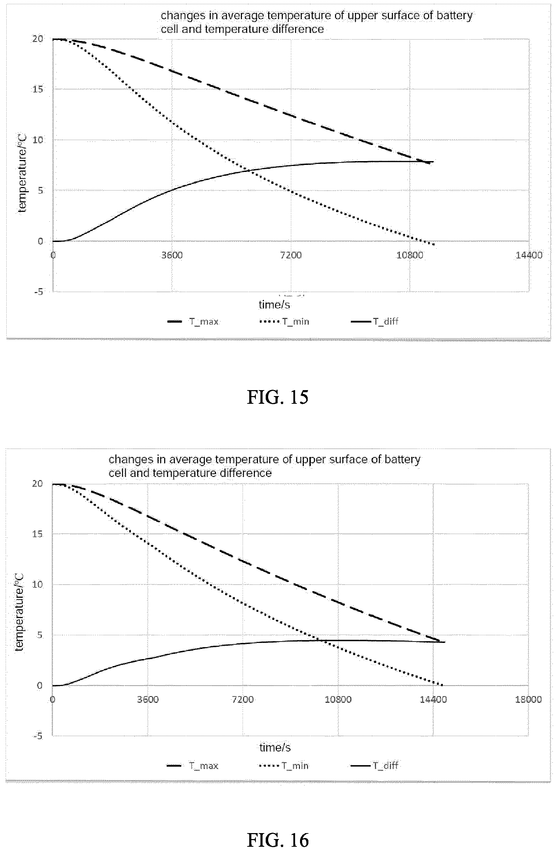

As shown in FIG. 15 and FIG. 16, which are cooling curve diagrams of simulation test by using a battery pack in the related art and a battery pack of the present application, respectively.

Here, a battery pack with 96 cells is taken as an example for simulation, and the average temperature of the upper surface of each cell is taken as the research object, so there are 96 research objects. The simulation model is the natural convection transient model and the battery pack is placed in the air, which solves the natural convection heat transfer by itself; the initial temperature of the battery pack is 20°C, while the environment temperature is -20°C; a thickness of a thermal insulation structure adhesive layer satisfies that H2-H3=4mm, H1-H3=4mm; a thickness of the thermal insulation plate satisfies H=2mm; G1=G2=1mm, and the thermal conductivity of the thermal insulation material is 2.0W/mK.

T max indicates that there is a maximum value among 96 research objects, that is, the maximum value of the average temperature of the upper surface of the battery cell. T min indicates that there is a minimum value among the 96 research objects, that is, the minimum value of the average temperature of the upper surface of the battery. T_diff represents a temperature difference value, that is, T_diff=T_max-T_min.

The data comparison between the battery pack in the related art (without thermal insulation plate and the thermal insulation structure adhesive layer) and the battery pack of the present application (with the thermal insulation plate and the thermal insulation structure adhesive layer) is shown in the Table 1 as follows.

**Table 1**

| | Time it takes battery pack to cool down to zero | Maximum temperature difference T diff |
|---|---|---|
| Related art | 11210 s | 7.90 °C |
| Present application | 14780 s | 4.48 °C |
| Effects of thermal insulation and temperature equalization of the present application | Time is extended by 32% | Temperature difference is reduced by 43% |

It can be seen from the comparison in the Table 1 that by adopting the structure of the thermal insulation box body of the present application, in which a thermal insulation plate and a thermal insulation structure adhesive layer are added in the battery pack, thereby greatly improving the thermal insulation effect of the battery pack and prolonging the time it takes the battery pack to cool down to zero; further, the maximum temperature difference is significantly reduced, thereby greatly reducing the impact of the environment on the battery.

In summary, compared with the prior art, the battery pack provided by the present application has the following advantages.

The present application provides a battery pack with a structure of a thermal insulation box body, in which through the isolation between the isolation plate and the longitudinal beams as well as the transverse beams of the battery pack box body, the heat transfer is blocked from the periphery surface of the isolation plate to the transverse beams and the longitudinal beams, and from the transverse beams and longitudinal beams to the isolation plate, thereby reducing the impact of the environment on the battery, slowing down the heating effect of the environment on the battery, and achieving the effect of temperature equalization of the battery pack, reducing the battery aging speed, and improving the available capacity and service life of the battery. The overall structure is simple and has strong practicality.

The above content is a further detailed description of the present application in combination with specific preferred embodiments, and it cannot be considered that the specific implementation of the present application is limited to these descriptions. For those of ordinary skill in the technical field to which the present application belongs, without departing from the concept of the present application, many simple deductions or substitutions can be made, which should be regarded as falling within the protection scope of the present application.

## Claims

1. A battery pack, **characterized by** comprising:
a battery module;
a battery pack box body, comprising a plurality of transverse beams and a plurality of longitudinal beams, the plurality of transverse beams and the plurality of longitudinal beams defining a plurality of module receiving spaces, the battery module being provided in a module receiving space, a side of each module receiving space being provided with an isolation plate, a first gap being provided between an isolation plate corresponding to each module receiving space and an inner side of a corresponding transverse beam, and a second gap being provided between the isolation plate corresponding to each module receiving space and an inner side of a corresponding longitudinal beam;
a liquid cooling component, arranged on a side of the isolation plate opposite to the battery module, heat conduction being performed between the liquid cooling component and the battery module through the isolation plate.

2. The battery pack according to claim 1, wherein the first gap and the second gap are filled with a thermal insulation material.

3. The battery pack according to claim 1, wherein an inner side of a longitudinal beam is provided with a longitudinal beam overlap rib, the longitudinal beam overlap rib comprises an overlap portion, and the overlap portion is located below the isolation plate, and a first thermal insulation plate is provided between an upper surface of the overlap portion and a lower surface of the isolation plate.

4. The battery pack according to claim 3, wherein the longitudinal beam overlap rib further comprises an extension portion located between the overlap portion and the longitudinal beam, the overlap portion is bent downward relative to the extension portion, the extension portion is arranged to be aligned with the isolation plate, and the second gap is provided between the extension portion and the isolation plate.

5. The battery pack according to claim 1, wherein an inner side of a transverse beam is provided with a transverse beam overlap rib which is located below the isolation plate.

6. The battery pack according to claim 5, wherein the transverse beam comprises end transverse beams provided at both ends of the battery pack box body, and a second thermal insulation plate is provided between a transverse beam overlap rib of an end transverse beam and the isolation plate.

7. The battery pack according to claim 6, wherein the transverse beam further comprises a middle transverse beam located between the end transvers beams, a distance H1 between an isolation plate corresponding to the end transverse beam and a lower end surface of the end transverse beam is less than a distance H2 between an isolation plate corresponding to the middle transverse beam and a lower end surface of the middle transverse beam.

8. The battery pack according to claim 7, further comprising a lower cover provided below the liquid cooling component, and a third thermal insulation plate is provided between the lower end surface of the end transverse beam and the lower cover.

9. The battery pack according to claim 6, wherein an end transverse beam at one end of the battery pack box body comprises a first transverse beam and a second transverse beam; the first transverse beam, the second transverse beam and a longitudinal beam are configured to define an accessory receiving space, the accessory receiving space is configured to receive a battery management system and a high-voltage electrical box, a side of the accessory receiving space is provided with an accessory isolation plate, and edges of the accessory isolation plate respectively abut against an inner side of the first transverse beam, an inner side of the second transverse beam and an inner side of the longitudinal beam.

10. The battery pack according to claim 9, wherein the liquid cooling component comprises a liquid cooling plate unit corresponding to the battery module in a one-to-one correspondence, a lower cover is provided below the liquid cooling component, and the transverse beam is configured to support on the lower cover after passing through a gap between liquid cooling plate units;
an upper cover is provided above the battery pack box body, and the upper cover is configured to simultaneously cover the module receiving space and the accessory receiving space.
